# EUROPEAN PATENT APPLICATION

(11) **EP 4 600 131 A1**
(43) Date of publication of application: **13.08.2025**
(21) Application number: 25156080.1
(22) Date of filing: 05.02.2025
(51) Int. Cl.: B62J 43/28, B60L 53/16, B60K 1/04, B62K 3/06

(54) **VEHICLE WITH A TUBULAR FRAME**

(30) Priority: 08.02.2024 NL 2036990
(71) Applicant: Koninklijke Gazelle N.V., 6951 BP Dieren (NL)
(72) Inventor: Knittel, Sören, 6951 BP DIEREN (NL); Kraaijvanger, Herman Martheus, 6951 BP DIEREN (NL)
(74) Representative: De Vries & Metman

(57) **Abstract**

Vehicle (1), such as a bicycle, comprising a frame (2) with at least one tube (3) having a connection port (4) comprising:
- a port opening (6) in the tube;
- a seat base (8) bordering the port opening at an outer side of the tube;
- a clip (15) in the interior (12) of the tube, releasably clipped to a border edge of the port opening, the clip being fastened to the seat base (8). The clip (15) can be resiliently foldable to allow passage through the port opening (6) before being fastened to the seat base (8). The clip (15) may for instance have two opposite ends with a pair of hook-shaped fingers (16) and a flexible strip (19) connecting the opposite ends, and dimensioned to bend around the port opening when the clip is snapped into the port opening.

## Description

The present disclosure relates to a vehicle having a frame comprising at least one tube provided with a connection port, e.g., a charge port for charging a battery within the tube. The vehicle can for example be a cycle, such as a bicycle, tricycle or cargo bike, e.g., with electric pedal assistance or with an electric main drive.

Such a port opening is typically bordered by an annular plastic part with flanges provided with openings for fasteners, e.g., a charge port cover. These fasteners are usually threaded and are brought in engagement with matching nuts or similar threaded parts at the inner side of the tube. Since access to the inner side of the tube is difficult, assembly of such a port is hardly possible. Alternatively, the openings in the pipe wall can be provided with screw thread, into which the screw thread of the relevant fastener can be accommodated. This has the drawback that threaded openings must be made in the tube around the port opening. Such threaded openings are sensitive to wear and complicate coating of the frame.

It is an object of the invention to provide a vehicle that allows easy mounting of the connection port and overcomes the drawbacks of prior art systems.

The object of the invention is achieved with a vehicle, such as a bicycle, comprising a frame with at least one tube having a connection port. The connection port comprises:
- a port opening in a tube wall of the tube;
- a seat base bordering the port opening at an outer side of the tube;
- a clip in the interior of the tube, clipped to a border edge of the port opening, the clip being fastened to the seat base. With such a system, the clip can first be clipped into port opening and the seat base can then securely be fastened to the clip.

The clip can easily be put in place, particularly if the clip is resiliently deformable, e.g., foldable, to allow passage through the port opening before being fastened to the seat base. The clip can for example be biased to an extended rest-position, requiring resilient deformation, e.g., pinching of the clip to move it into the interior of the tube and to snap or clip it into the port opening. This way, the clip can be pretensioned to clamp itself within the port opening.

In a specific embodiment, the clip comprises one or more flanges with clip openings, aligned with through holes in the tube wall and with fastener openings in the seat base. Fasteners connecting the seat base to the clip pass the fastener openings in the seat base, the through holes in the tube wall and the clip openings of the clip to be fastened. The clip openings are positioned accurately by clipping the clip in the right position and remain in place during fastening, without the need to access the tube interior with any type of tool.

Optionally, the fasteners can be self-tapping screws, that tighten themselves into the clip openings in the clip, or bolts engaging matching screw threads in the respective clip openings. Other types of fasteners, such as split pins, snap rivets or press-on nails, can also be used.

In a specific embodiment, the clip comprises hook-shaped fingers with top ends folded to grip around the edge of the port opening when the clip is mounted. This way, the clip fixates itself, particularly if it is biased to an extended position.

The clip can for example comprise a first end with a first set of one or more of the hook-shaped fingers and an opposite second end with a second set of one or more of the hook-shaped fingers. The first and second ends are connected by a flexible strip that bends around the port opening when the clip is snapped into the port opening. To this end, the clip can for example be C- or U-shaped, polygonal or triangular, or even be straight in an extended position in the absence of bending forces, as long as it bends around the port opening when it is placed in the port opening, i.e., in a mounted position. This way, the clip does not cross or block the port opening, leaving the port opening free for receiving a functional element, such as a charge connector or the like. Such a clip can be folded by pinching the free ends towards each other. This tensions the clip to flip back to the extended position once the folding forces are released, or to the mounting position when the clip is mounted in the port opening.

The clip can for example be made of an elastic material, such as a plastic material.

The position of the hook-shaped fingers and the geometry of the port opening can be matched so that the clip openings of the clip align with the through holes in the tube wall when the clip is snapped into the port opening. This way, the geometry of the port opening guides the clip to automatically align the clip openings with the through holes through the tube wall. This can for example be achieved if the port opening is drop-shaped with a pointed end and an opposite rounded end, while the clip has a first end with a first pair of hook-shaped fingers and an opposite second end with a second pair of hook-shaped fingers, wherein the hook-shaped fingers of the first pair are at a mutual distance corresponding to a width of the point shaped end of the port opening, the distance being smaller than the distance between the hook-shaped fingers of the second pair, which corresponds to a width of the rounded end of the port opening.

The seat base can for example be provided with snap latches extending through the port opening into an interior space of the tube, to engage matching recesses in a connector or element to be fitted into the port opening.

Optionally, the seat base is provided with a lid or cover, which is movable, e.g., hingeable between a closed position, closing off the port opening, and an open position allowing access to the port opening.

The port opening can for example comprise or receive a connector, such as a battery charging connector, received within seat base and the port opening, e.g., with a clamping fit. To this end, the connector may for example have a top end with a flange or rim, while the seat base comprises an annular recess receiving the flange or rim of the connector.

The invention also pertains to a clip for use in a port opening of a vehicle, in particular a bicycle, e.g., to fixate a seat base, such as a charge port cover, as disclosed above.

The port opening can be positioned in a down tube of a bicycle frame, which is often used as a housing for a battery, or in any other tube of the frame.

Optionally, the port opening can be used for other purposes, such as a display connection in a top tube, handle bar or down tube, a lighting element, or a sensor, such as a speed sensor, or the like.

In the context of the invention a tube is any hollow shell element forming part of the frame. The tube comprising the port opening can have any suitable cross sectional geometry or wall thickness and can be made of metal, a plastic material or of any other suitable material.

The invention will be further explained with reference to the accompanying drawings showing an exemplary embodiment.
Figure 1: shows a bicycle according to the present invention;
Figure 2: shows in detail a connection port of the bicycle of Figure 1;
Figure 3: shows the connection port of Figure 2 in exploded view;
Figure 4: shows the connection port cover of Figure 2 with an open lid and a charge connector;
Figure 5: shows the connection port cover of the connection port of Figure 2 in exploded view;
Figure 6: shows the bottom side of the connection port cover of Figure 5;
Figure 7: shows the connection port of Figure 2 in longitudinal central cross section.

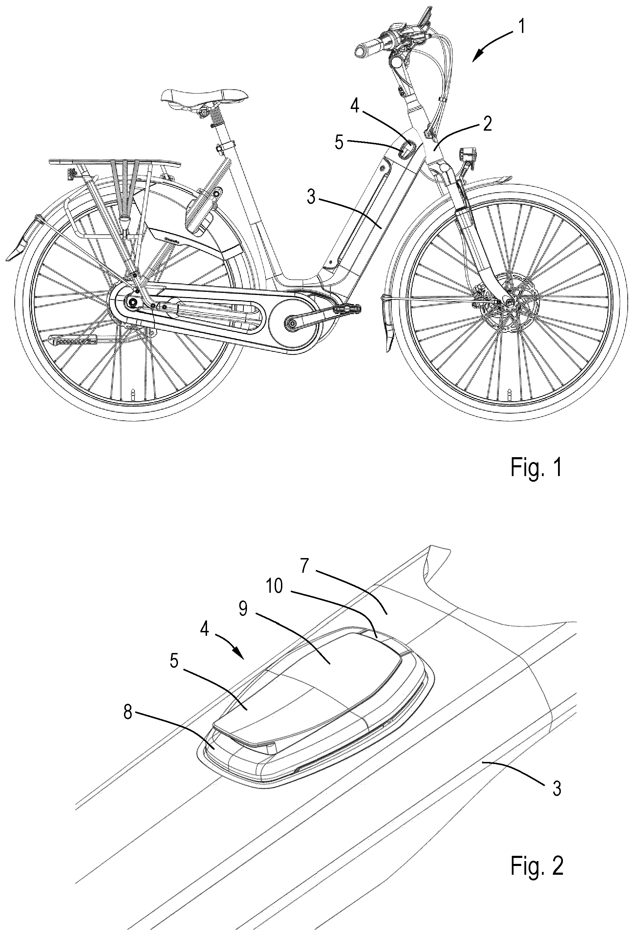

Figure 1 shows an electrical bicycle or e-bike 1 with a frame 2 including a down tube 3 enclosing an in-tube battery (not shown). The top end of the down tube 3 is provided with a charge port 4 closed off by a charge port cover 5.

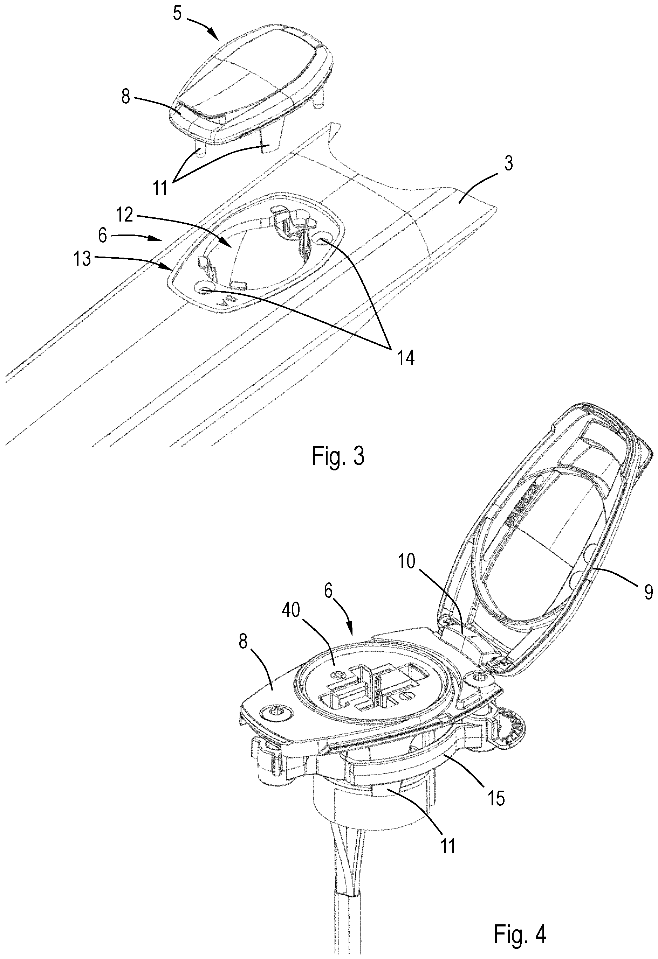

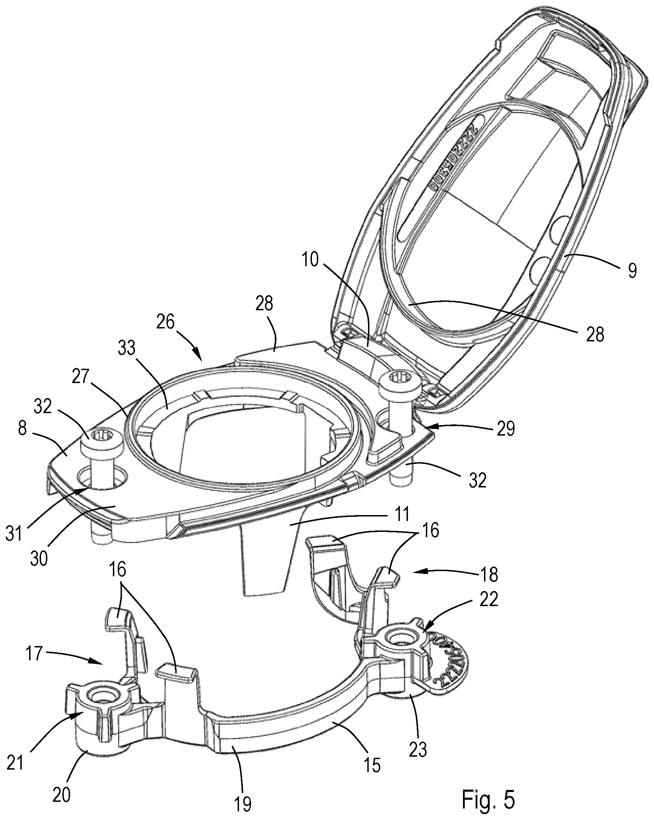

The charge port 4 is shown in more detail in Figures 2 and 3 and comprises a port opening 6 (see Figure 3) in a wall 7 of the down tube 3 and the charge port cover 5 closing off the port opening 6. The charge port cover 5 comprises a seat base 8 mounted to the down tube 3, and a lid 9 hinging relative to the seat base 8 by means of a hinge 10 (see Figure 5) .

Figure 3 shows the down tube 3 with the charge port cover 5 in exploded view. The seat base 8 has three snap latches 11 at its lower side, extending into the down tube's interior 12 when the seat base 8 is mounted to the down tube 3. The snap latches 11 can be used for a snap fit connection of an element, such as a charge connector 40, comprising matching recesses, as shown in Figure 4. Other connection elements can also be used.

The down tube 3 has a recessed section 13 bordering the port opening 6. This recessed section 13 has an outline matching the outline of the seat base 8 and is covered by the seat base 8 when mounted. The recessed section 13 is provided with two through holes 14 extending from the outer surface of the down tube 3 to the interior 12 of the down tube 3.

A clip 15 in the interior 12 of the down tube 3 is clipped into the opening 6 and has two pairs of hook-shaped fingers 16 gripping around the border of the port opening 6.

The clip 15 is shown in more detail in Figure 5. In the shown exemplary embodiment, the clip 15 is C-shaped with a first end 17 having a first pair of hook-shaped fingers 16, and a second end 18 with a second pair of hook-shaped fingers 16. The first and second ends 17, 18 are connected by a flexible strip part 19. The clip 15 is made of a plastic or similar elastic material and is resiliently deformable into a folded position by pinching the first and second ends 17, 18 of the C-shape towards each other. In this folded position, the folded clip 15 can pass through the port opening 6. This folding tensions the clip 15 to flip back to the extended position (shown in Figure 5) once the folding forces are released. In this extended position, the size of the clip 15 is larger than the diameter of the port opening 6 so it catches the edges of the port opening 6. Consequently, in this extended position, the clip 15 cannot pass through the port opening 6 anymore. When the hook-shaped fingers 16 of the clip 15 grip the border of the port opening 6, the clip 15 clamps itself in a mounting position, which is between the folded position and the extended position. This way, the clip 15 is pretensioned to clamp itself within the port opening 6.

Between the first pair of hook-shaped fingers 16 on the first end 17 is a first flange 20 with a first clip opening 21. A second clip opening 22 is present in a second flange 23 adjacent the second pair of hook-shaped fingers 16 at an outer end of the flexible strip part 19. Since the first flange 20 is between the hook-shaped fingers 16 of the first end 17, these hook-shaped fingers 16 are further apart form each other than the hook-shaped fingers 16 of the second end 18.

As is clear from Figure 3, the port opening 6 is drop-shaped and has a point-shaped end 24 and an opposite rounded end 25. The hook-shaped fingers 16 of the first end 17 of the clip 15 are at a mutual distance corresponding to a width of the rounded end 25 of the port opening 6. The hook-shaped fingers 16 of the second end 18 of the clip 15 are at a smaller mutual distance corresponding to a width of the point-shaped end 24 of the port opening 6. This way, the position of the hook-shaped fingers 16 on the clip 15 and the geometry of the port opening 6 are matched so that the clip 15 can easily be manoeuvred into the desired mounting position, shown in Figure 3. In this position, the clip openings 21, 22 of the clip 15 are aligned with the through holes 14 through the wall 7 of the down tube 3 when the clip 15 is clipped into the port opening 6.

As shown in Figure 5, the seat base 8 of the charge port cover 5 has a central opening 26 aligned with the port opening 6 in the wall 7 of the down tube 3 when the charge port cover 5 is mounted to the down tube 3. The central opening 26 is bordered by a circular rim 27 enclosed by a second circular rim 28 at the inner side of the lid 9 when the lid 9 is in the closed position.

At the side of the hinge 10, the seat base 8 has a first seat base flange 28 with a first fastener opening 29 at a distance from a longitudinal center line of the seat base 8. At the opposite side of the central opening 26, the seat base 8 has a second seat base flange 30 with second fastener opening 31 on the longitudinal center line.

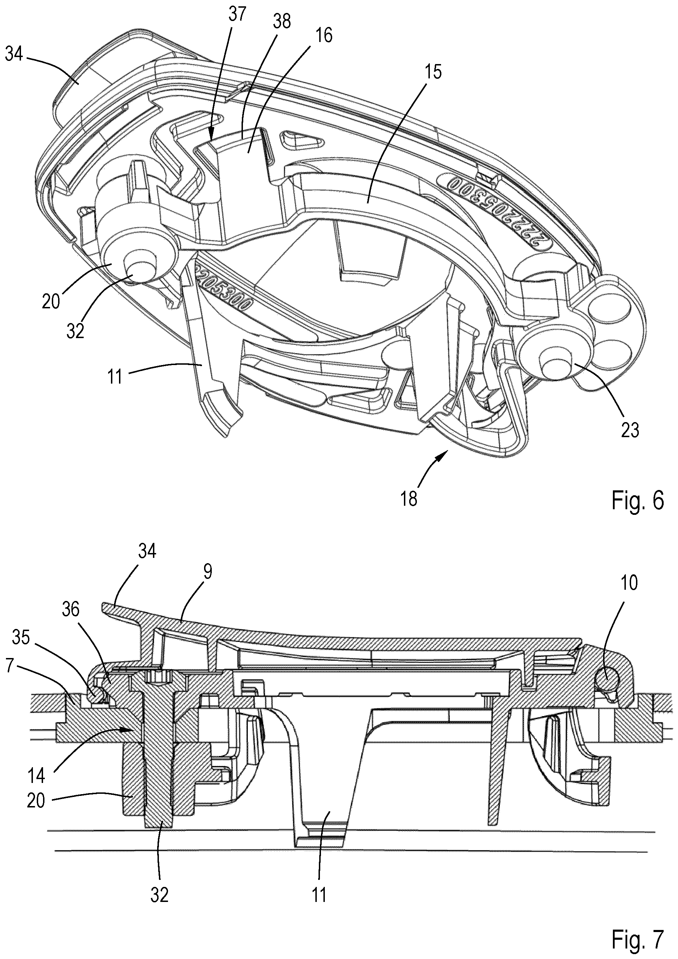

After the clip 15 is mounted in the port opening 6, the seat base 8 can be positioned on the wall 7 of the down tube 3 in such a position that the fastener openings 29, 31 are aligned with the through holes 14 in the wall 7 of the down tube 3, and with the clip openings 21, 22 of the clip 15. In a next step, fasteners 32 can be inserted into the fastener openings 29, 31 of the seat base 8, the through holes 14 through the wall 7 of the down tube 3 and into the clip openings 21, 22 of the clip 15, as shown in cross section in Figure 7. The fasteners can for example be self-tapping screws that tighten themselves into the respective clip openings. Other types of fasteners can also be used.

The central opening 26 of the seat base 8 has a cylindrical inner wall with a shoulder 33 engaging a matching shoulder or flange of a part received in the central opening 26 and the port opening 6, such as a charge connector (see Figure 4).

At the side opposite to the hinge 10, the lid 9 provided with an extended edge 34 forming a grip for a user, and a latch 35 forming a releasable snap fit with a recessed edge 36 of the seat base 8.

As shown in Figure 7 the lower side of the seat base 8 is provided with recesses 37 receiving folded top ends 38 of the hook-shaped fingers 16 when the charge port cover 5 is mounted.

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified.

## Claims

1. Vehicle (1), such as a bicycle, comprising a frame (2) with at least one tube (3) having a connection port (4) comprising:
- a port opening (6) in a tube wall (7) of the tube;
- a seat base (8) bordering the port opening at an outer side of the tube;
- a clip (15) in the interior (12) of the tube, releasably clipped to a border edge of the port opening, the clip being fastened to the seat base (8).

2. Vehicle according to claim 1, wherein the clip (15) is resiliently deformable, e.g., foldable, to allow passage through the port opening (6) before being fastened to the seat base (8).

3. Vehicle according to claim 2, the clip (15) being biased to an extended rest-position, requiring resilient deformation, e.g., pinching of the clip (15) to clip it into the port opening (6).

4. Vehicle according to anyone of the preceding claims, wherein the clip (15) comprises at least one flange (20, 23) with a clip opening (21, 22), aligned with a respective through hole (14) in the tube wall (7) and with a fastener opening (29, 31) in the seat base (8),
wherein a fastener (32) connecting the seat base to the clip (15) passes the fastener opening (29, 31) in the seat base (8) and the through hole (14) in the tube wall (7) and the clip opening (21, 22) to be fastened.

5. Vehicle according to any one of the preceding claims, wherein the clip (15) comprises hook-shaped fingers (16) with top ends (38) folded to grip around the border edge of the port opening (6).

6. Vehicle according to claim 5, wherein the clip (15) has:
- a first end (17) with a first set of the one or more hook-shaped fingers (16) and
- an opposite second end (18) with a second set of the one or more hook shaped fingers (16), and
- a flexible strip or backbone (19) connecting the first and second ends, the flexible strip being dimensioned to bend around the port opening when the clip is snapped into the port opening.

7. Vehicle according to claims 4 and 5 or 6, wherein the position of the hook-shaped fingers (16) on the clip (15) and the geometry of the port opening (6) are matched in such a way that the clip openings (21, 22) align with the through holes (14) in the tube wall (7) when the clip is clipped into the port opening (6).

8. Vehicle according to claim 6 and 7, wherein the port opening (6) in the tube wall (7) is drop-shaped with a point shaped end (24) and an opposite rounded end (25), and wherein the first and second ends of the clip both comprise two hook-shaped fingers (16), and wherein the hook-shaped fingers (16) of the first end are at a mutual distance corresponding to a width of the point shaped end (24) of the port opening (6), the distance being smaller than the distance between the hook-shaped fingers (16) of the second end, which corresponds to a width of the rounded end (25) of the port opening (6).

9. Vehicle according to any one of the preceding claims, wherein the seat base (8) comprises one or more snap latches (11) extending through the port opening (6) into an interior space (12) of the tube (3).

10. Vehicle according to any one of the preceding claims, wherein the seat base (8) is provided with a lid or cover (9), which is movable, e.g., hingeable between a folded position, closing off the port opening (6), and an open position allowing access to the port opening (6).

11. Vehicle according to anyone of the preceding claims, comprising a connector, such as a battery charging connector, received within a central opening (26) of the seat base (8) and the port opening (6).

12. Vehicle according to claim 11, wherein the connector has a top end with a flange or rim,
wherein the seat base (8) comprises a shoulder engaging the flange or rim of the connector.

13. Vehicle according to any one of the preceding claims, wherein the vehicle (1) is an e-bike and the connector port (4) is a charge connector port holding a charge connector.

14. Vehicle according to claim 13, wherein the charge connector port (4) is mounted in a down tube of the e-bike, the down tube holding a battery operatively connected to the charge connector in the charge connector port (4).

15. Clip for use in a connection port of a vehicle according to any one of the preceding claims.
